# EUROPEAN PATENT APPLICATION

(11) **EP 3 326 571 A1**
(43) Date of publication of application: **30.05.2018**
(21) Application number: 16200800.7
(22) Date of filing: 25.11.2016
(51) Int. Cl.: A61C 9/00

(54) **METHOD AND SYSTEM FOR RECONSTRUCTING DENTAL STRUCTURES**

(71) Applicant: RWTH Aachen University, 52062 Aachen (DE)
(72) Inventor: VOLLBORN, Thorsten, 52066 Aachen (DE); CHUEMBOU PEKAM, Fabrice, 52080 Aachen (DE); HABOR, Daniel, 52066 Aachen (DE); RADERMACHER, Klaus, 52222 Stolberg (DE); HEGER, Stefan, 69198 Schriesheim (DE); TINSCHERT, Joachim, 52066 Aachen (DE)
(74) Representative: Eisenführ Speiser

(57) **Abstract**

The invention relates to a method and system for reconstructing dental structures, such as dents or residual dents which are at least partly covered by soft tissue, such as gingiva, in a region of interest, the method comprising: providing (201) a surface reflection scan of the dental structures, providing (202) a sub-surface reflection scan of the dental structures, fusing (203-208) the surface reflection scan and the sub-surface reflection scan in order to reconstruct the dental structures, wherein the fusing comprises: segmenting (203) dental tissue from non-dental tissue based on the sub-surface reflection scan, generating (203) a dental model based on the segmented dental tissue, and fusing the surface reflection scan (240) and the dental model (260). The system and method allows for a reconstruction of dental structures which does not rely on gingiva management and which provides for a time efficient data acquisition.

## Description

The invention relates to a method and system for reconstructing dental structures, such as dents or residual dents. In particular, the invention relates to methods and systems for reconstructing, particularly 3D reconstructing, dental hard and soft tissue in a region of interest.

The conventional process for the manufacture of fixed dentures requires a plurality of expensive steps, which influence the precision and duration of the functional entirety of the end product. The methods used today for the shaping of prepared tooth stumps with impressions employing elastomers already cause errors during an early phase of the production of dental restorations, which are propagated throughout the entire process.

The impression requires laborious draining of the prepared tooth, such that salvia and other body fluids do not deteriorate the impression of the tooth geometry into the impression material. In the case of low level preparations, it may become necessary to retract the gingiva with the aid of retraction threads or even remove the gingiva by electrosurgical means (gingivectomy). The often painful retraction of the gingiva can result in a gingival recession with cosmetic deficits. A plaster model is created from the silicon impression as a model, on which crowns, bridges and other implants are produced in a dental laboratory. Here, too, sources of errors exist, which lower the precision of the restorations. The chain of inaccuracies can ultimately lead to misalignment of the restorations, resulting in expensive adaptation or even in a new production becoming necessary.

Both the need for long term stable restorations in the posterior dental area and the increased demand for aesthetic restorations in the anterior tooth area have led to advances in the development of aluminum and zirconium oxide ceramics in dental medicine. The processing of these materials is demanding and requires the use of CAD/CAM technology.

To this purpose, methods are employed, which scan the surface of a prepared dent or an impression without contact using optical measuring technologies and provide CAD data for the further planning and manufacturing process. As an alternative to conventional impression technique in combination with extra oral 3D scanners, intraoral optical dental scanners are to be mentioned. However, no such system has been proposed which would eliminate the sources of error of conventional impression techniques, in particular, the subgingival preparation margins cannot be detected with current intraoral dental scanners.

A further approach for the acquisition of intraoral geometry of prepared teeth is the use of ultrasound, which offers the possibility of penetrating soft tissue, blood and saliva non-invasively without the painful application of retraction threads. European patent application EP 2 023 849 A1 discloses the use of an ultrasonic single channel transducer in combination with a multi axis moving reflector.

While determining the geometry intraorally using ultrasound can eliminate the need for retracting gingiva in order to determine the surfaces of dental structures covered by gingiva or body fluids, it still shows multiple drawbacks which impede its application in CAD/CAM based prosthetic. The production of a dental prosthesis requires a precise representation not only of the prepared dent, but in general of the entire jaw if not of both jaws. Acquiring precise ultrasound images of the entire jaw is difficult due to the limited field of view of the ultrasound scanner. Further, since the ultrasound scanner would have to be provided at multiple locations over the jaw, registration between the ultrasound images will become an issue. Most importantly, the extensive treatment time is both disturbing for the patient and expensive for the dentist and the health care system.

It has thus been an object of the present invention to provide a method and a system for reconstructing dental structures in a region of interest, which avoids the drawbacks of the methods and systems known in the art. In particular, it has been an object to provide a method and a system, which allows for a reconstruction which does not rely on gingiva management and draining and which provides for a time efficient data acquisition.

In one aspect, a method for reconstructing dental structures, such as dents or residual dents, which are at least partly covered by body fluids or soft tissue, such as gingiva, blood and saliva, in a region of interest, is provided. The method comprises: a) providing a surface reflection scan of the dental structures, b) providing a sub-surface reflection scan of the dental structures, c) fusing the surface reflection scan and the sub-surface reflection scan in order to reconstruct the dental structures, wherein the fusing comprises: d) segmenting dental tissue from non-dental tissue based on the sub-surface reflection scan, e) generating a dental model based on the segmented dental tissue, and f) fusing the surface reflection scan and the dental model.

The method according to the invention allows the integration of a sub-surface reflection scan into a prosthetic CAD/CAM process for reconstructing dental structures using a surface reflection scan. Since the sub-surface reflection scan is fused with the surface reflection scan, the sub-surface reflection scan does not have to be provided for the entire jaw or jaws. A surface reflection scan of the dental structures is technically less complex to acquire and the acquisition of the sub-surface reflection scan is facilitated since it does not necessarily cover a large region. The method therefore results in an enhanced spectrum of indication of the sub-surface reflection scan, since it is fused with the surface reflection scan.

In an embodiment the sub-surface reflection scan is based on a non-invasive procedure, in particular on at least one of ultrasound and optical coherence tomography.

Ultrasound and optical coherence tomography (OCT) are non-invasive diagnostic techniques, which can be employed for rendering in vivo cross-sectional views of dental structures, in particular including soft tissue, which covers hard tissue dents or dental structures. Although ultrasound and OCT are provided as examples for sub-surface reflection scans, also different imaging techniques can be employed for obtaining a sub-surface reflection scan in other embodiments. It is of importance that the sub-surface scan be a non-invasive reflection scan and does not implicate negative impact on the patient, such as potentially harmful ionizing radiation as in the field of x-ray or computed tomography (CT) imaging techniques.

In an embodiment, the surface reflection scan is provided as a point cloud. Preferentially, each of the points of the point cloud indicates a point on the surface of the dental structure or the soft tissue covering the dental structure, on which, for instance, light gets reflected. In other embodiments, the surface reflection scan can also be provided in a different form as known in the art, for instance as a surface model comprising for instance triangles and vertices.

In an embodiment, the dental model comprises a surface model or a point cloud. The dental model is generated based on the segmented dental tissue, which is segmented from the sub-surface reflection scan. Preferentially, the dental model thus represents the surface of the dental structure, which has been segmented from non-dental tissue based on the sub-surface reflection scan. Both a representation as a point cloud and as a surface model can be advantageously employed according to the needs of the application. In further embodiments also different representations of the dental model are contemplated.

In an embodiment, the segmentation is performed based on a contrast threshold. In other embodiments, more subtle forms of segmentation, preferentially image segmentation, based on the sub-surface reflection scan are contemplated. For instance, a multiscale morphological gradient followed by a watershed segmentation based on a topology of the sub-surface reflection scan can be employed. Preferentially, the segmentation is optimized towards the image acquisition technology employed for obtaining the sub-surface reflection scan, such as ultrasound or OCT.

In an embodiment, the segmentation is performed based a machine learning algorithm. The machine learning algorithm can determine the segmentation based on an adaptive model, wherein the adaptive model can be improved based on provided training data. Preferentially, the machine learning algorithm includes an artificial neural network based model or other suitable model known in the art.

In an embodiment, the method further comprises generating a gingival model based on the segmented non-dental tissue. While the non-dental tissue, i.e. comprising gingiva, are not of clinical relevance for the manufacture, of, for instance, dental prostheses, it may provide additional useful information to the dentist.

In an embodiment the surface reflection scan is provided based on a dental impression of the dental structures, in particular based on a dental impression of both jaws and a bite registration.

In an embodiment the surface reflection scan comprises an extraoral digital optical scan of an analogue dental impression.

In an embodiment the surface reflection scan comprises an intraoral optical scan.

Preferentially, the surface reflection scan comprises at least one of an intraoral optical scan or an optical scan based on an analog digital impression. The method according to the invention therefore advantageously integrates into the well established workflow for the restoration of dents. Yet, these embodiments are only examples of obtaining the surface reflection scan and other methods of obtaining the surface reflection scan are contemplated.

In an embodiment the region of interest comprises at least one dent to be restored before or after preparation, called tooth or residual tooth.

In an embodiment the region of interest further comprises at least one neighboring dent, preferentially in case the dent to be restored is before preparation.

Preferentially, the region of interest therefore not necessarily comprises the entire jaw or both jaws of the subject. The region of interest is preferentially limited to the dent to be restored and/or neighboring dents if needed. It is thus advantageously possible to limit the efforts for obtaining the sub-surface reflection scan and thereby the impact on the patient to a minimum.

In an embodiment the step of fusing the surface reflection scan with the sub-surface reflection scan further comprises: registering the dental model with the surface reflection scan by a) aligning the dental model with the surface reflection scan using a point to point registration and b) best-fit registration.

Preferentially, the surface reflection scan and the sub-surface reflection scan are indicative of corresponding dental structures in the region of interest. In other words, both the surface reflection scan and the sub-surface reflection scan share the surface of those dental structures, which are not covered soft tissue, wherein the sub-surface reflection scan is further indicative of those dental structures, which are covered by soft tissue. Preferentially, the alignment of the dental model with the surface reflection scan therefore employs those regions of the surface reflection scan, in which dental structures are not covered by soft tissue. The point-to-point registration and the best-fit registration are of course only examples for registering the dental model with the surface reflection scan and other registration methods or algorithms as known in the art are contemplated.

In an embodiment the step of fusing the surface reflection scan with the sub-surface reflection scan further comprises: cropping the dental model to the region of interest, and cutting the region of interest from the surface reflection scan.

Preferentially, cropping the dental model refers to removing all areas outside the region of interest from the dental model. In other words, only the region of interest remains with the dental model and the outside region is removed or masked, for instance. The complementary procedure is performed with the surface reflection scan, i.e. the surface reflection scan is such processed that all regions but the region of interest are kept, i.e. not removed and/or masked. Preferentially, the region, to which the dental model is cropped, and the region, which is cut from the surface reflection scan, correspond spatially to the same region.

In an embodiment the step of fusing the surface reflection scan with the sub-surface reflection scan further comprises, after cropping the dental model to the region of interest, converting the dental model to a dental point cloud. In this embodiment, the dental model can previously be provided as a surface model or the like and the surface reflection scan can be provided as a point cloud. The surface reflection scan and dental model, which are registered to each other, are thus converted to be provided in the same data format which facilitates the fusion of the surface reflection scan and the sub-surface reflection scan. Although in this embodiment the surface reflection scan and the dental model are both provided as point clouds, this is a mere example and in other embodiments both elements can also be provided in a different common format, e.g. as surface models.

In an embodiment the step of fusing the surface reflection scan with the sub-surface reflection scan further comprises adapting the resolution of points of the surface reflection scan and/or the dental point cloud to approximately match. A resolution of points refers to an average or estimated distance between neighboring points. Since in this embodiment the resolution of points of the surface reflection scan and the dental point cloud approximately match, the fusion becomes facilitated.

In an embodiment the step of fusing the surface reflection scan with the sub-surface reflection scan further comprises fusing the surface reflection scan and the dental point cloud to a common point cloud. The common point cloud thereby preferentially comprises points from outside the region of interest, which originate from the surface reflection scan, and points from within the region of interest, which originate from the sub-surface reflection scan. The common point cloud allows for a particularly straight forward implementation and processing, wherein of course also other formats can be implemented likewise.

In an embodiment the step of fusing the surface reflection scan with the sub-surface reflection scan further comprises crosslinking the common point cloud such as to reconstruct a surface of the dental structure. Preferentially, the step of crosslinking includes connecting each of the points of the point cloud with at least one, preferentially with two, of the closest neighboring points. The reconstructed surface of the dental structure therefore preferentially combines the dental tissue surface in the region of interest, which is obtained from the sub-surface reflection scan, and the dental tissue surface outside the region of interest, which is obtained from the surface reflection scan, such that also dental tissue covered with soft tissue within the region of interest becomes reconstructed without the need for gingiva management.

In an embodiment the step of fusing the surface reflection scan with the sub-surface reflection scan further comprises at least one of correcting surface errors due to erroneous crosslinking, and closing surface holes of the dental structure. The resulting dental structure surface will thus be improved and show less irregularities and errors.

In an embodiment the method further comprises preparing the reconstructed dental structures for digital printing. This step can comprise converting the reconstructed dental structures to a particular data format or to adapt limits of the reconstructed dental structures to production and/or manufacturing limits connected with the printing process.

In an embodiment the sub-surface reflection scan comprises an ultrasound scan, wherein the ultrasound scan is obtained using an intraoral scanning device for recording ultrasound scan data in the region of interest, such as a mouth of a patient, wherein the intraoral scanning device comprises: a housing having a proximal portion and a distal portion, the distal portion being adapted for placement within the patient's mouth; a high frequency sonic head comprising at least one transducer for scanning a covered or non-covered tooth region or residual tooth region and mounted within the distal portion of the housing, and means for applying excitation signals to the sonic head in order thereby to produce an ultrasonic wave which passes over at least part of the tooth region or residual tooth region such that the sonic head receives ultrasonic waves reflected by the tooth region or residual tooth region to be scanned. The sonic head is movable at least in a first and a second degree of freedom. A drive assembly is arranged within the proximal portion of the housing for driving the sonic head in the first and second degree of freedom such that the sonic head is movable in a plane for applying the ultrasonic wave to a predetermined region of the tooth region or residual tooth region.

The intraoral scanning device is formed as a handheld device. The housing comprises a distal portion which is to be placed inside the patient's mouth when a recording process is carried out. Preferably the distal portion of the housing is formed such that the patient may bite on it for fixing the intraoral scanning device during data acquisition. The high frequency sonic head is mounted within the distal portion of the housing and, thus, is adjacent to the tooth region or residual tooth region to be scanned during the recording process. This sonic head is moved by the drive assembly in the first and second degree of freedom such that the sonic head is moved in a plane over the tooth region or residual tooth region to be scanned. Therefore, it is possible to use a single transducer even though also an array could be used within the scope of the invention. The benefit of an array, in general, is that it is not necessary to move it in a plane, because it consists of a plurality of transducers. On the other hand, a high-frequency single transducer has the benefit that it has a high focus in depth and, thus, can record ultrasound scan data with high accuracy. Additionally, single transducers are more cost effective than transducer arrays. The transducer is preferably adapted to transmit ultrasonic waves with a frequency in the range of 20 to 100 MHz, preferably 40 to 100 MHz, more preferably 40 to 60 MHz.

While the distal portion and the transducer are adapted for placement within the patient's mouth, the proximal portion of the housing preferably comprises a handle so that an operator can hold and place the housing to position the sonic head for a recording operation. Preferably the patient fixes the distal portion by biting. Alternatively, an additional fixing apparatus such as a support arm or the like is provided. The tooth region or residual tooth region to be scanned includes all dental hard and soft tissue structures, such as teeth, bone, gingiva, nerves and the like. The expression "residual tooth" refers to a part of a tooth which e.g. has already been prepared for a dental reconstruction. In the following, when reference is made to a "tooth" or a "residual tooth", it shall be understood that both is meant, even though only one term is used. When reference is made to a "covered tooth region" or "covered residual tooth region", this means that the tooth region or residual tooth region is covered with soft tissue, e.g., gingiva, saliva, blood, or sulcular fluids. The term "uncovered tooth region" refers to the tooth or bone itself.

Preferably, the intraoral scanning device comprises or is connected to a processing unit for processing the recorded ultrasound scan data for enhancing their depth of focus and/or for reconstructing a 3D model. The processing unit may be provided within the housing, preferably, in the distal portion. In a preferred embodiment, the processing unit is provided external to the housing and connected to the housing, in particular, to the sonic head, via a cable or wireless. In a preferred solution the processing unit is provided as a separate unit on a movable support device, such as a roller carriage. The processing unit is preferably arranged as close as possible to the sonic head, such that damping and noising of the recorded signal is reduced by a short wiring between the sonic head and the processing unit. In one embodiment, the processing unit is provided in a separate housing which might be provided at a head rest of a dental chair when the intraoral scanning device is used. Alternatively, the patient may hold this controller housing in his hands during the scanning process.

In an embodiment the step of generating a dental model based on the ultrasound scan, preferentially the segmenting step, comprises determining portions of the ultrasound scan data in proximity to surfaces of the region of interest, preferably, by extracting from the ultrasound scan data an upper envelope and a lower envelope of the surfaces of the region of interest based on the amplitude of the ultrasound scan data and by determining the portions based on the upper envelope and the lower envelope and/or by applying a pre-defined sleeve model that defines a sleeve around the surfaces of the region of interest to the ultrasound scan data, and applying a synthetic aperture focusing technique (SAFT) only to the determined portions in order to enhance the depth of focus of the ultrasound scan data in the determined portions.

In a first variant, the determination is preferably achieved by extracting from the ultrasound scan data an upper envelope and a lower envelope of the surfaces of the tooth region or residual tooth region based on the amplitude of the ultrasound scan data and by determining the portions of the ultrasound scan data in proximity to surfaces of the tooth region or residual tooth region based on the upper envelope and the lower envelope. For example, the ultrasound scan data can be processed on a slice-by-slice basis, wherein each slice can be analyzed in order to determine in each column of the slice a first and a last position at which the amplitude of the ultrasound scan data exceeds a pre-defined threshold value. The first position can then be regarded as forming part of the upper envelope and the last position can be regarded as forming part of the lower envelope. The totality of all first and last positions of all columns in all slices then forms the upper envelope and the lower envelope, respectively. This approach allows extracting the positions forming the upper envelope and the lower envelope with only a very simple and fast one-dimensional processing.

The threshold is preferably pre-defined such that the amplitude of the ultrasound scan data only exceeds the threshold value at an interface between different materials, e.g., at the interface between the coupling medium and the tooth region or residual tooth region or, if the tooth region or residual tooth region is covered with soft-tissue, e.g., gingiva, saliva, blood, or sulcular fluids, between the soft-tissue and the tooth region or residual tooth region. Where the tooth region or residual tooth region is not covered with soft-tissue, the upper envelope substantially corresponds to the surface of the tooth or residual tooth itself, whereas in covered regions it substantially corresponds to the top surface of the soft-tissue. In contrast, while the lower envelope also substantially corresponds to the surface of the tooth or residual tooth itself where the tooth region or residual tooth region is not covered with soft-tissue, in covered regions it substantially corresponds to the bottom surface of the soft-tissue. It is noted, however, that due to the limited depth of focus the extracted upper and lower envelopes can somewhat deviate from the true surfaces of the tooth region or residual tooth region. For example, the upper envelope and the lower envelope may not perfectly meet at the surface of the tooth or residual tooth where the tooth region or residual tooth region is not covered with soft-tissue.

Preferably, the portions of the ultrasound scan data in proximity to surfaces of the tooth region or residual tooth region are determined as the portions of the ultrasound scan data between the upper envelope and the lower envelope, wherein an additional "safety margin" can optionally be added on either side. The SAFT method is then only applied to the portions determined in this way, which may greatly reduce the processing time. For instance, when the columns of the ultrasound scan data are represented as one-dimensional arrays resp. images of e.g. 3000 pixel height, the size of the portion between between the upper envelope and the lower envelope can e.g. be in the range of about 300 pixel where the tooth region or residual tooth region is covered with soft-tissue and even much smaller in uncovered regions.

It shall be noted that the above-described processing can be preceded by additional processing steps, such as a noise suppression, e.g., by means of a suitable filtering. Moreover, in order to improve the robustness of the approach, it can additionally be performed in other directions through the ultrasound scan data, i.e., in directions that are at an angle with the columns described above. It shall further be noted that the description, here, assumes a representation of the ultrasound scan data in which the occlusal surface of a tooth or residual tooth is located more at the top of the ultrasound scan data than the remaining parts thereof. A person skilled in the art can understand how the description would have to be changed if the representation of the ultrasound scan data would be different, e.g., if the occlusal surface of a tooth or residual tooth would be located more at the top of the ultrasound scan data than the remaining parts thereof.

In a second variant, which can be used as an alternative to the first variant or combined therewith, the determination of the portions of the ultrasound scan data in proximity to surfaces of the tooth region or residual tooth region is preferably achieved by applying a pre-defined sleeve model that defines a sleeve around the surfaces of the tooth region or residual tooth region to the ultrasound image data. As described before, the ultrasound scan data can be processed e.g. on a slice-by-slice basis, wherein a slice of the sleeve model - or a dedicated slice sleeve model - can be fitted to the contour formed by the surfaces of the tooth region or residual tooth region in the slice. The slice of the sleeve model or the dedicated sleeve model can also be referred to as a "tube model", since it resembles a tube that encloses the formed contour.

Preferably, a plurality of pre-defined sleeve models resp. tube models are provided in a database, wherein a model that matches the surface geometry of the tooth region or residual tooth region can be selected from the database based on the ultrasound scan data and/or additional a-priori information. For instance, the model can be selected based on the dimensions, e.g., width, length and/or depth, of one or more of the upper and lower envelopes described above. Additionally or alternatively, a-priori information about e.g. the number of teeth or residual teeth in the scanned tooth region or residual tooth region, the location of the teeth or residual teeth or the selected intraoral interface structure can be used for selecting the model. The selected model can then be applied to the ultrasound image data based on the above-described parameters / characteristics as well as the coordinates of the high frequency sonic head during the ultrasound scan. The pre-defined sleeve models resp. tube models can be determined, for instance, using statistical methods from a large number of ultrasound scans of different tooth regions or residual tooth regions.

The applied SAFT method is preferably based on the assumption that the focal point of a single ultrasound transducer can be viewed as a virtual acoustic point source of a spherical wave (VSAFT). This variant of the "original" SAFT method is particularly well suited for use with a highly focusing single ultrasound transducer and allows to obtain a resolution of the ultrasound scan data that is substantially independent of depth. The VSAFT method is preferably combined with a suitable weighting method, e.g., with the so-called "coherent factor", the "minimum variance beamforming" or an apodization window such as a boxcar window, a Hanning window or a Hann window, in order to reduce artifacts in the ultrasound scan data resulting from additional side lobes that are typically comprised by the sound field of a highly focusing ultrasound transducer.

In order to further optimize the resolution and to reduce noise, the SAFT-processed ultrasound scan data can be filtered with a plurality of frequency filter banks (e.g., in the range of 1 to 200 MHz, preferably 20 to 100 MHz). Thereafter, the filtered ultrasound scan data are demodulated in order to determine the envelope and, optionally after a suitable grayscale coding, a further noise reduction can be performed by means of an optional median filtering. In order to optimize the information content, the scanning process and the subsequent data processing may be repeated for different ultrasound directions.

In the case of subgingivally prepared teeth, the method preferably removes portions of the ultrasound scan data corresponding to soft-tissue, in particular, the gingiva, of the tooth region or residual tooth region. Therewith, ultrasound scan data that obscure the preparation border of a tooth or residual tooth to be restored can be eliminated from the data record, preferably leaving only ultrasound scan data corresponding to the actual tooth or residual tooth. This is an example of the above described step of segmentation.

The removal can be based on a similar process as the determination of the portions of the ultrasound scan data in proximity to surfaces of the tooth region or residual tooth region described above. In particular, an upper envelope and a lower envelope of the surfaces of the tooth region or residual tooth region can be extracted again based on the amplitude of the processed ultrasound scan data. Since the depth of focus of the ultrasound scan data has been enhanced by applying the SAFT method, the extracted upper and lower envelopes will now resemble the surfaces of the tooth region or residual tooth region with a higher accuracy than before the SAFT processing. Based on the upper envelope and the lower envelope, the portions corresponding to the soft-tissue can then be identified and removed. For instance, an extend of the portions of the ultrasound scan data between the upper envelope and the lower envelope can be analyzed, wherein, when the extend exceeds a pre-defined threshold value, a portion is identified to correspond to soft-tissue, and when the extend does not exceed the pre-defined threshold value, the portion is identified to correspond to the tooth or residual tooth.

It is further preferred that the method extracts points from the ultrasound scan data corresponding to surface points of a tooth or residual tooth based on a maximum intensity projection (MIP). In doing so, it is assumed that the location of the maximum echo amplitude corresponds to a point on the surface of the tooth or residual tooth. This allows for a reliable segmentation of the surfaces of the tooth or residual tooth. This step may also comprise an additional threshold-based filtering.

The extracted points, or if multiple scans have been performed, the points extracted from each scan, are finally reconstructed to generate a three-dimensional surface reconstruction of the tooth or residual tooth. This is preferably done by fitting a model of the geometry of the tooth or residual tooth to the points. Thereby, the model, which is preferably a statistical mode of the geometry of the tooth or residual tooth, is selected in dependence of the form of the tooth to be restored. For instance, the model can be selected based on one or more of (i) the specific preparation of the tooth or residual tooth, (ii) the type of the tooth or residual tooth (e.g., incisor or molar), and (iii) the size of the tooth or residual tooth (e.g., on a scale from 1 to 10). e, a plurality of models having different characteristics in each of these dimensions are provided in a database. The fitting preferably reduces the average distance between the extracted points and the model using, for instance, a non-rigid iterative closest point (ICP) algorithm. As an alternative to this "model fitting"-based reconstruction, the points can be interpolated based on knowledge about the tooth or residual tooth. The knowledge, in this case, can be the same or similar to the above-described characteristic dimensions of the geometry model, i.e., the specific preparation, type and/or size of the tooth or residual tooth. The interpolation may be two- or three-dimensional and may be based, for instance, on the known thin-plate spline robust point matching algorithm (TPS-RPM) as described e.g. in Chui H. and Rangarajan A., "A new point matching algorithm for non-rigid registration", Comput. Vis. Image Understand., Vol. 89, 2003, pages 114 to 141. Finally, it is also contemplated to combine the "model fitting"-based approach and the knowledge-based interpolation approach.

In a further aspect a system for reconstructing dental structures, such as dents or residual dents, which are at least partly covered by soft tissue, such as gingiva, in a region of interest, is provided. The system comprises a surface reflection scan providing unit for providing a surface reflection scan of the dental structures, a sub-surface reflection scan providing unit for providing a sub-surface reflection scan of the dental structures, a fusing unit for fusing the surface reflection scan and the sub-surface reflection scan in order to reconstruct the dental structures. The fusing unit comprises a segmentation unit for segmenting dental tissue from non-dental tissue based on the sub-surface reflection scan, and a dental model generating unit for generating a dental model based on the segmented dental tissue. The fusing unit is configured to fuse the surface reflection scan and the dental model.

In a further aspect a computer program for reconstructing dental structures is provided, the computer program comprising program code means for causing a system as defined in claim 14 to carry out the method as defined in claim 1, when the computer program is run on the system.

The system and the computer program can be combined with any of the above described embodiments of the method according to the invention, wherein the advantageous effects are likewise obtained with the correspondingly adapted system and computer program, respectively.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality. The wording, "a number of" items, comprises also the number one, i.e., a single item, and further numbers like two, three, four and so forth.

In the drawings:
- Fig. 1: shows schematically an example of a method for reconstructing dental structures,
- Fig. 2: shows schematically and exemplarily a flowchart illustrating a method for reconstructing dental structures,
- Fig. 3: shows schematically and exemplarily a system for reconstructing dental structures,
- Fig. 4: shows a perspective partially cut-out view of the intraoral scanning device;
- Fig. 5: shows the intraoral scanning device without housing and only base plate;
- Fig. 6: shows a side view of Fig. 5;
- Fig. 7: shows a full cut through the perspective of Fig. 5;
- Fig. 8: shows a top view of Fig. 5;
- Fig. 9a: shows a top view of Fig. 5 with rotated rotor bar and rotated sonic head;
- Fig. 9b: shows a front view of Fig. 9a;
- Figs. 10a - 10c: show different arrangements of a plurality of transducers of the sonic head;
- Fig. 11: shows a schematic view of a lower jaw with the intraoral scanning device arranged within the mouth of a patient;
- Fig. 12: shows a schematic view of an intraoral interface structure arranged at a portion of the lower jaw;
- Fig. 13: shows a flowchart illustrating a method suitable for processing the ultra-sound scan data recorded by the intraoral scanning device; and
- Fig. 14: shows further details of the method.

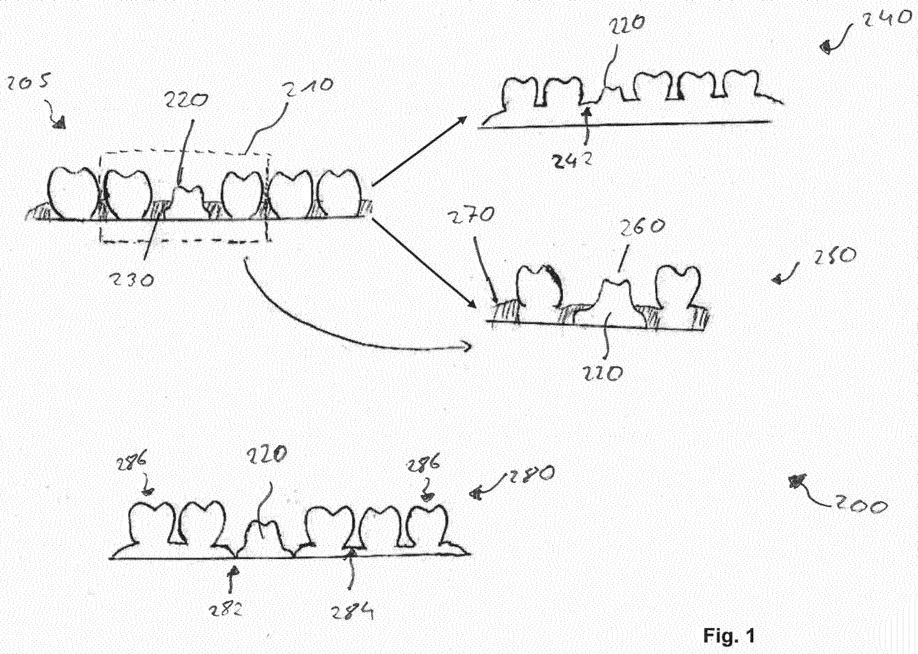

Fig. 1 shows schematically an example method 200 for reconstructing dental structures. First, schematically an excerpt from a denture 205 of a patient including a region of interest 210 is shown. The region of interest 210 comprises a prepared dent 220 for which a dental prosthesis is to be manufactured in this example. The denture 205 further includes soft tissue or gingiva 230, which partly covers the prepared dent 220. In order to reconstruct the dental structures of denture 205, for instance for further CAD/CAM processing, until now gingiva management became necessary, which included retracting the gingiva 230, for instance.

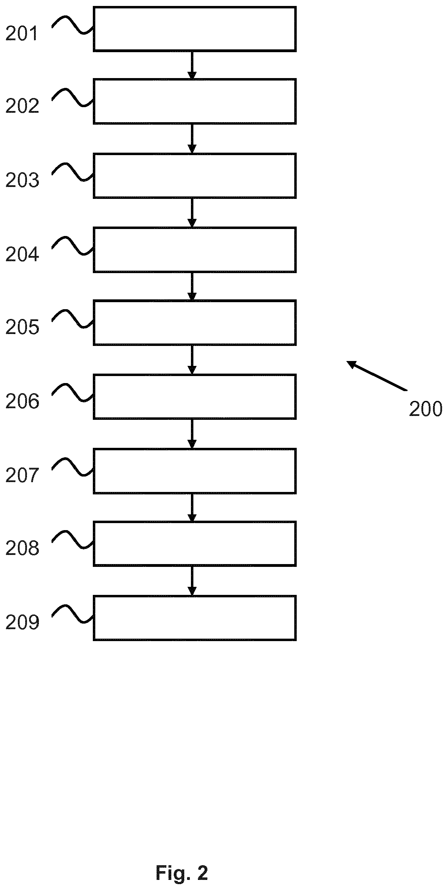

Method 200 includes obtaining a surface reflection scan 240 and a sub-surface reflection scan 250, which will be detailed with reference to Fig. 2 below.

The surface reflection scan 240 comprises the surface of all hard dental structures and the soft tissue of the denture 205. In proximity to the prepared dent, indicated with 242, it can be seen that the surface reflection scan 240 deviates significantly from the surface of the dental structures, such that dental structures reconstructed based on the surface reflection scan 240 will not be capable of accurately describing these regions. The surface reflection scan 240 can be obtained, as will be described for instance with reference to Fig. 2 in more detail, based on an optical scan of a dental impression or based on an optical scan carried out intraorally.

The sub-surface reflection scan 250, obtained for instance using ultrasound or OCT, is capable of distinguishing between hard tissue dental structures and soft tissue dental structures. Method 200 now includes deriving a dental model 260, indicative of a surface of the hard tissue dental structures, and optionally further a gingiva model 270, which includes the soft tissue surface. To separate the hard dental tissue from soft dental tissue, a segmentation based on the sub-surface reflection scan 250 can be employed, for instance.

The sub-surface reflection scan 250 is acquired for a particular region of the denture 205 including the region of interest 210. However, it is not necessary to obtain the entire denture 205 as a sub-surface reflection scan 250, which will significantly increase the speed of data acquisition. The surface reflection scan 240 is fused with the sub-surface reflection scan 250 in the region of interest 210 to obtain a fused model 280. It can be seen in fused model 280 that dental structures in the region of interest 210 can accurately reproduce the hard dental structure surface, as indicated for instance at exemplary position 282. At position 282, the difference resulting from the fusion can be seen in comparison to position 242 of the surface reflection scan 240. More precisely, it can be seen that gingiva 230 covering the denture 205 next to the prepared dent 220 can successfully be removed from the fused model 280, without having to recess or remove the gingiva 230 within the patient's mouth.

Method 200 for obtaining fused model 280 is now described in more detail with reference to Fig. 2. The method 200 comprises a step 201, in which a surface reflective scan 240 of a denture 205, such as a surface reflection scan of one or both jaws or parts thereof, is obtained. The surface reflection scan 240 is, for instance, obtained either using an intraoral optical scanner, such as described below, or based on an extraoral digitalization of an analog dental impression. However, these are just examples and further ways of obtaining a surface reflection scan 240 are contemplated.

In step 202, a sub-surface reflection scan 250 of a dent, which is to be restored, and optionally surrounding dents, is obtained. The extent of the sub-surface reflection scan obtained in step 202 can depend on whether the dent to be restored is before or after preparation. Preferentially, in case the dent to be restored is before preparation, also surrounding dents are included in the sub-surface reflection scan. However, of course also in the case the dent to be restored is after preparation, additional neighboring dents can be included.

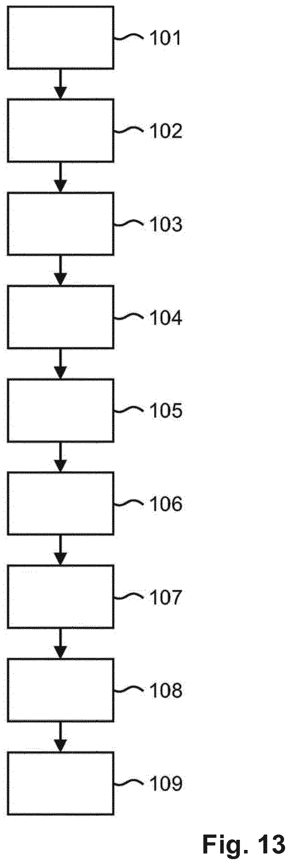

In step 203, a dental model 260 indicative of the dental structure surface in the sub-surface reflection scan 250 is determined. The dental model 260 is, for instance, obtained by segmenting dental tissue from non-dental tissue based on the sub-surface reflection scan 250 and generating the dental model 260 based on the segmented dental tissue. One exemplary method of data segmentation will be discussed with reference to Fig. 13.

In step 204, the surface reflection scan 240 is registered with the sub-surface reflection scan 250. Registration is preferentially performed based on dental structures which are not covered by soft tissue such as gingiva 230, i.e. those regions of surface reflection scan 240 and sub-surface reflection scan 250, which appear and are visible in both scans. The registration step 203 can preferentially include a point to point registration, i.e. a semiautomatic registration, or a best fit registration, which can be carried out automatically. However, also further methods of registering can be employed. The registration in step 204 can be performed based on the sub-surface reflection scan 250 itself or, preferentially, based on the generated dental model 260.

In step 205, the dental model 260 is cropped to the region of interest and the region of interest is cut from the surface reflection scan 240. The dental model 260 is used instead of the sub-surface reflection scan 250, such that no soft tissue is included, which could cover the dental structures in the region of interest. Preferentially, the region of interest comprises the prepared dent and, further preferentially in case the dent to be restored is before preparation, also surrounding dents.

In step 206, the cropped dental model 260 and the surface reflection scan 240 of which the region of interest has been cut, are optionally both converted to point clouds. The representation as point clouds is of course only one of the possible alternatives and other formats are contemplated in other examples.

In step 207, both point clouds are fused to a single point cloud. Preferentially, the resolution of points of the surface reflection scan 240 and/or the point cloud resulting from the dental model 260 are adapted to approximately match, in order to obtain a point cloud in which the distance between points is approximately homogeneous.

In step 208, the common point cloud is crosslinked such as to reconstruct a surface of the dental structure. Points contained in the common point cloud are connected, wherein preferentially each point gets connected to its closest neighboring points. Step 208 optionally includes correcting surface areas, which occurred to erroneous crosslinking. Surface holes in the dental structure can automatically or manually be closed after cross-linking.

In step 209, the reconstructed dental structures are prepared for digital printing. For instance, the step of preparing the reconstructed dental structures for digital printing comprises adapting the data storage format or includes other post-processing steps, which are necessary prior to printing.

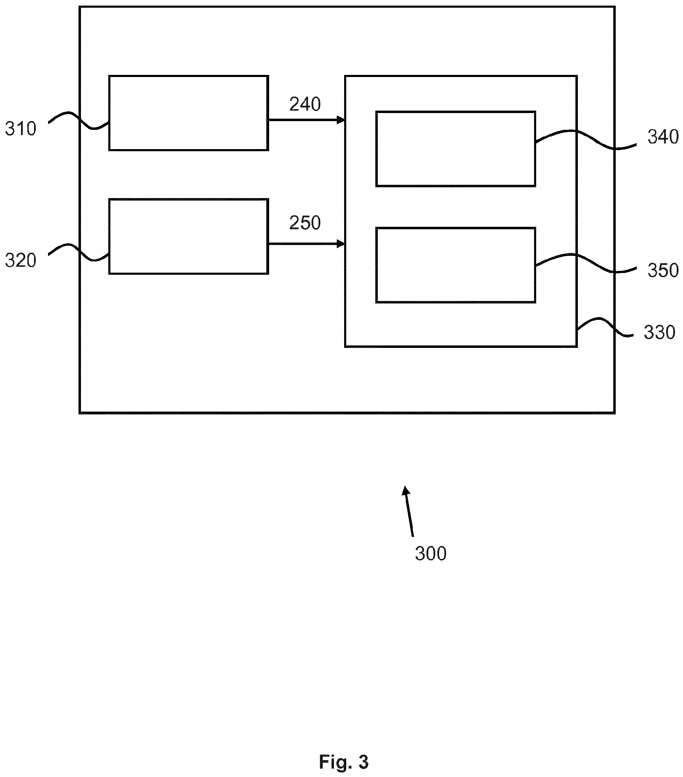

Fig. 3 schematically and exemplarily shows a system 300 for reconstructing dental structures. System 300 is substantially configured to carry out the method exemplified, for instance, in Fig. 2 and comprises a surface reflection scan providing unit 310 for providing a surface reflection scan 240 of the dental structures, a sub-surface reflection scan providing unit 320 providing sub-surface reflection 250 of the dental structures, and a fusion unit 330 for fusing the surface reflection scan 240 and the sub-surface reflection scan 250. In this example, the fusion unit 330 comprises a segmentation unit 340 for segmenting dental tissue from non-dental tissue based on the sub-surface reflection scan 250 and a dental model generating unit 350 for generating a dental model 260 based on the segmented dental tissue. The fusion unit 330 is configured to fuse the surface reflection scan 240 and the dental model 260 generated by dental model generating unit 350. In some examples, the system 300 can comprise further units (not shown), more precisely fusing unit 330 can comprise further units for carrying out any of the previously described method steps 203 to 209. In other examples, fusing unit 330 as exemplified in Fig. 3 can be adapted to carry out one, more or all of the method steps 203 to 209 described with reference to Fig. 2.

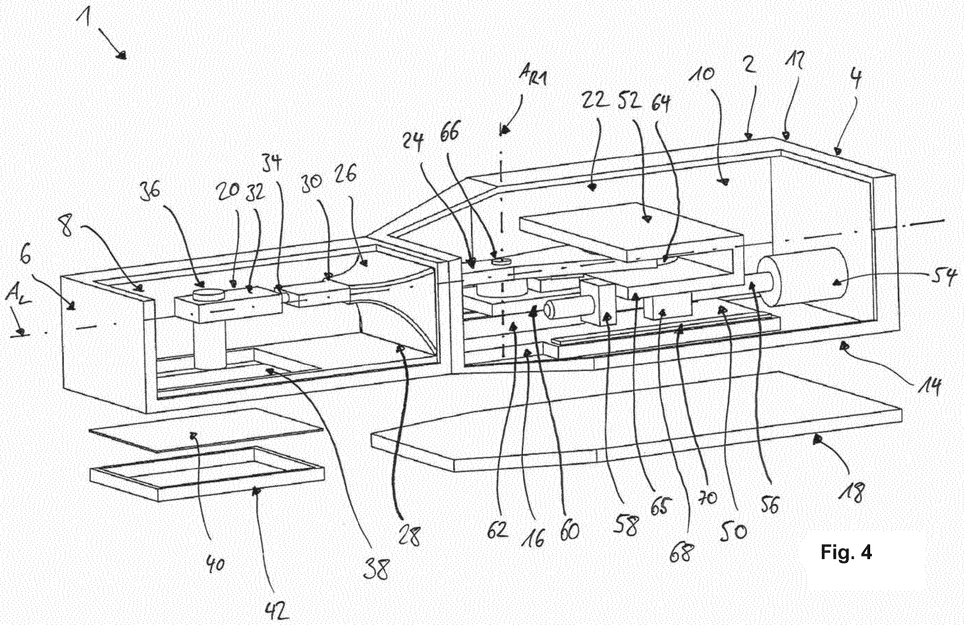

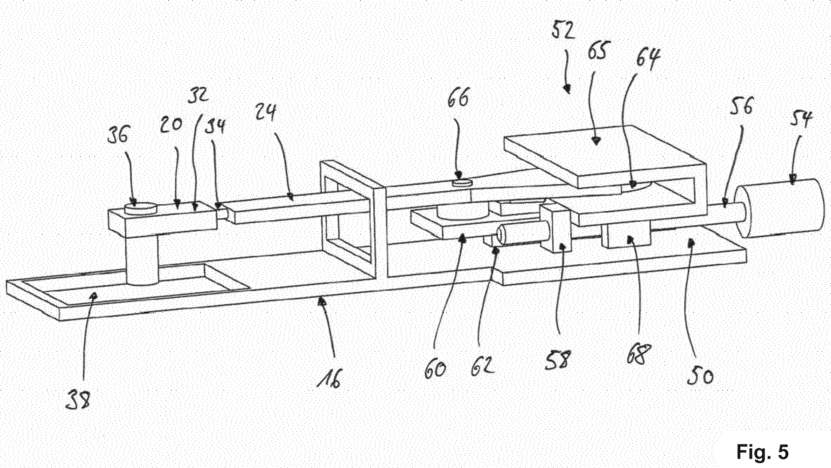

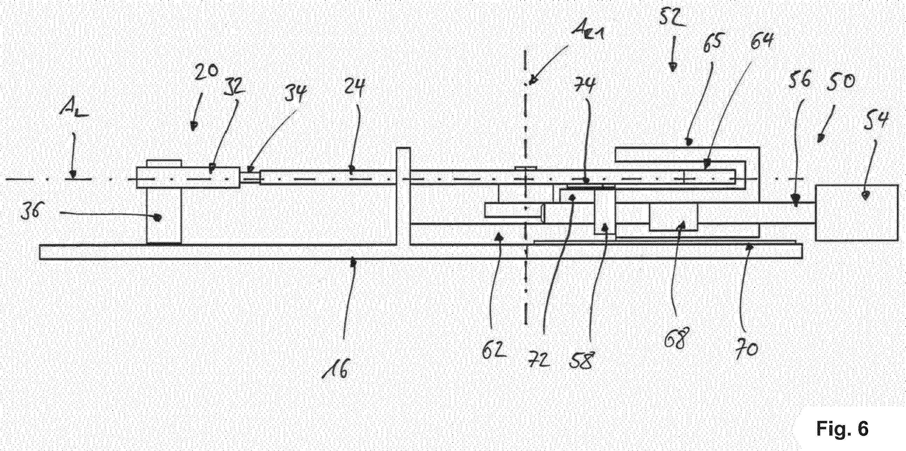

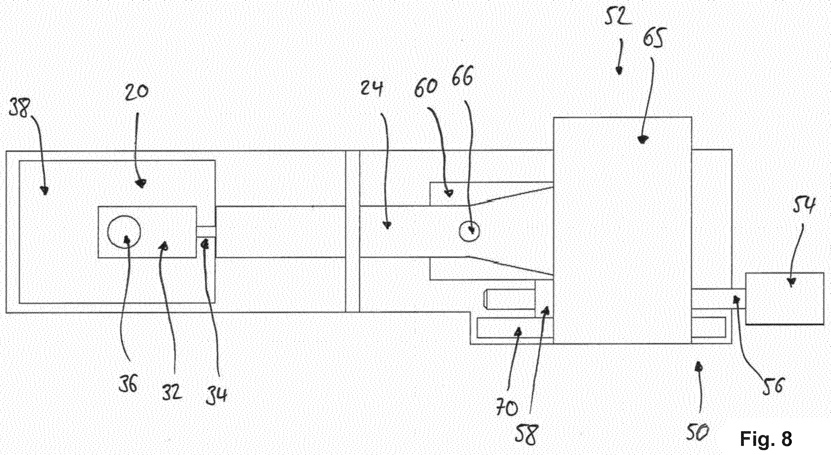

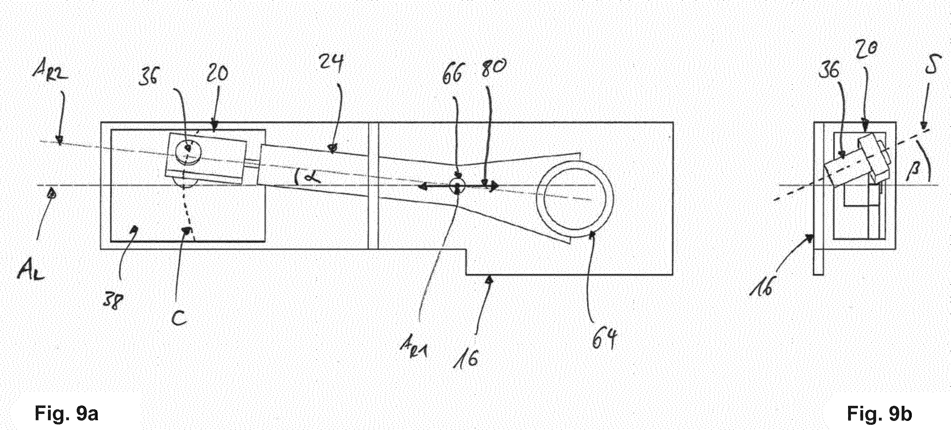

With reference to Figs. 4 to 14, an intraoral scanning device 1 useful for the invention is described. The intraoral scanning device 1 comprises a housing 2 with a proximal portion 4 and a distal portion 6, wherein the distal portion 6 is adapted to be placed within the patient's mouth (see also Figs. 8 and 9). The housing 2 comprises a wet area 8 and a dry area 10, wherein the wet area 8 is provided in the distal portion 6 of the housing 2 and the dry area 10 in the proximal portion 4 of the housing 2. The proximal portion 4 is suited to be gripped by an operator and may comprise an additional handle or the like. With respect to Fig. 4, the housing 2 comprises an upper portion 12 and a lower portion 14, wherein the lower portion 14 is formed by a base plate 16 (see Figs. 5 to 8). The base plate 16 runs from the distal portion 6 to the proximal portion 4 of the housing 2 and provides structural support. As shown in Fig. 4, the base plate 16 within the proximal portion 4 is provided with a shielding plate 18 which might be - as well as all housing parts - formed out of a grippable rubber material, so that the operator does not have to touch a slippery metallic surface provided by the base plate, but can easily grip and handle the intraoral scanning device 1.

The intraoral scanning device 1 moreover comprises a high frequency sonic head 20 and a drive assembly 22 for driving the sonic head 20 in a first and second degree of freedom (see, in particular, Figs. 5 and 9a). The drive assembly 22 comprises a rotor bar 24 which is rotatable about a first rotational axis A_{R1}. The rotor bar 24 extends from the proximal portion 4 to the distal portion 6 and from the dry area 10 to the wet area 8. Moreover, the rotor bar 24 extends through a sealing membrane 26 which is provided between the distal portion 6 and the proximal portion 4 and seals the wet area 8 from the dry area 10. Membrane 26 is shown to be funnel-shaped. This is not necessary but membrane 26 could also be formed having a bellow or bag which allows lateral movement of the rotor bar 24 with respect to the housing 2 in the portion where the membrane 26 is provided, and also allows movement perpendicular to the rotational axis A_{R1} along the longitudinal axis A_{L} of the scanning device (see Fig. 9a). Membrane 26 is fixedly and sealingly connected with its outer rim 28 to the housing 2 and with its inner rim 30 to the rotor bar 24.

The sonic head 20 comprises a head body 32 which is connected via a pivotable connection 34 to the rotor bar 24. The pivotable connection 34 allows swiveling the sonic head 20 about axis A_{R2} (see Fig. 9a) which in Fig. 4 is identical with axis A_{L}. Axis A_{R2} is the longitudinal axis of the rotor bar 24. The head body 32 according to the example shown in Fig. 4 carries a single transducer 36 which projects downwardly in Fig. 4. The single transducer 36 is formed as a high frequency transducer which is able to excite ultrasonic waves with a frequency of 50 MHz and is also able to receive the reflected waves.

To allow pass-through of the ultrasonic waves, housing 2 comprises an opening 38 which is formed in the distal portion 6 of the housing 2. The opening 38 is closed with an acoustic window 40 which is held in place and is biased by means of a frame 42. In Fig. 4, the acoustic window 24 and the frame 42 are shown in an exploded view but are mounted within the opening 38. The frame protects the acoustic window 40 and also biases the acoustic window 40 which is formed by a foil element having a low impedance for ultrasonic waves and matches the impedance of the coupling medium. This results in a low reflexion factor and no impedance difference.

The drive assembly 22 is formed as a serial kinematic and comprises a linear actuator 50 for driving the sonic head 20 in a first degree of freedom and a rotational actuator 52 for driving the sonic head 20 in a second degree of freedom. The first degree of freedom is a linear degree of freedom along the axis A_{L} and the second degree of freedom is a rotational degree of freedom about the rotational axis A_{R1}. The linear actuator 50 comprises a linear motor 54 driving a spindle 56. The linear motor 54 is mounted at the base plate 16. The spindle 56 acts together with a nut 58 which is attached to a body 60 of the rotational actuator 52. The body 60 of the rotational actuator 52 is guided in a linear bearing 62 which allows linear movement of the body 60 along the linear bearing 62 defining a linear axis by means of actuating the linear drive 54. When the linear drive 54 is actuated, the spindle 56 is rotated and the nut 58 is moved back and forth along the spindle 56 and, thus, the body 60 is moved back and forth accordingly.

The rotational actuator 52 is formed as a voice coil drive. It comprises the body 60 which is substantially U-shaped in cross section and supported in the linear bearing 62 and connected to the nut 58. The rotational actuator 52 comprises a coil 64 which is supplied with current for inducing an electromagnetic field (see Fig. 9a) and a corresponding magnetic field generated by a ferromagnetic circuit 65 having neodymium magnet, provided within the body 60. The coil 64 is fixed to the rotor bar 24 which is supported on a rotational bearing 66 rotatable about axis A_{R1}. The bearing 66 is carried by the body 60. The body 60 thus carries the bearing 66 and the ferromagnetic circuit 65.

The rotational actuator 52, in particular the ferromagnetic circuit 65, is provided with a sensor 68 which is movable together with the rotational actuator relative to the base plate 16. The base plate 16 is provided with a scale 70 which is read by the sensor 68.

A second sensor 72 is provided on the body 60 of the rotational actuator 52 and reads a scale 74 which is attached to the rotor bar 24. By means of the two sensors 68, 72, the position of the sonic head 20 can be measured.

As can be inferred from the figures, the section of the rotor bar 24 from the sonic head 20 to the bearing 66 is longer than the section from the bearing to the coil, preferably by 10% to 50%. This arrangement helps to reduce the velocity of the active in respect to the passive element of the rotational encoder 68, 70 leading to a robust position measurement. Repeatability in view of positioning the sonic head 20 is important. Alternatively, when the rearward section of the arm 24 is longer, or the encoder 68, 70 is placed in the distal portion of the housing 2, the arm 24 provides a leverage effect and thus acts as a measurement amplifier.

With respect to Figs. 9a and 9b the movement of the sonic head 20 will be described. As mentioned above, the sonic head 20 is connected via the rotor bar 24 to a linear actuator 50 and a rotational actuator 52. The rotational actuator 52 is mounted on the linear actuator 50 and movable by means of the linear actuator 50. In Fig. 9a a top view of the rotor bar 24 including the coil 64 for the voice coil drive of the rotational actuator 52 is shown. The other elements (in particular, the linear actuator 50) are not shown in Fig. 9a for clarity reasons (see in particular Figs. 4 to 8).

The rotor bar 24 is rotatable about axis A_{R1} which is facilitated by the bearing 66. Bearing 66 is supported on the body 60, which is movable by means of the linear actuator 50 in the direction of the two-headed arrow 80 shown in Fig. 9a. By means of the rotational actuator 52 the rotor bar 24 is rotatable about axis A_{R1} which is indicated by angle α in Fig. 9a. According to Fig. 9a the rotor bar 24 is slightly moved upwards about angle α. Therefore, by rotating the rotor bar 24 about axis A_{R1} the sonic head 20 can be moved along semicircular paths C (in Fig. 9a only one indicated). In operation the sonic head 20 will be moved along one of the circular paths C to inspect the tooth region or residual tooth region and after the respective semicircular path has been passed, the linear actuator 50 will be controlled to move the rotor bar 24 into the direction of axis A_{L} in a small step, preferably 0.5 x λ, wherein λ is the wavelength of the sonic waves transmitted by the transducer 36. By subsequently actuating the linear actuator 50 and the rotational actuator 52, substantially the whole area defined by the opening 38 in the base plate 16 can be scanned.

In a preferred embodiment the sonic head 20 additionally is rotatable or swivable about axis A_{R2}, which is the longitudinal axis of the rotor bar 24. Also this embodiment is shown in Figs. 9a and 9b. In particular, the front view in Fig. 9b which is a view from the front left hand side of Fig. 9a indicates this. The transducer 36 comprises a line of sight S defining a direction of wave propagation indicating the direction of the transmitted ultrasonic waves. According to Fig. 9b the sonic head 20 and thus also the transducer 36 is slightly angled to the side by angle β. In such an orientation the sonic head 20 is able to better scan gaps between teeth, and in particular the oral and vestibular surfaces of a tooth region or residual tooth region to be scanned. For swiveling the sonic head 20 an additional actuator may be provided.

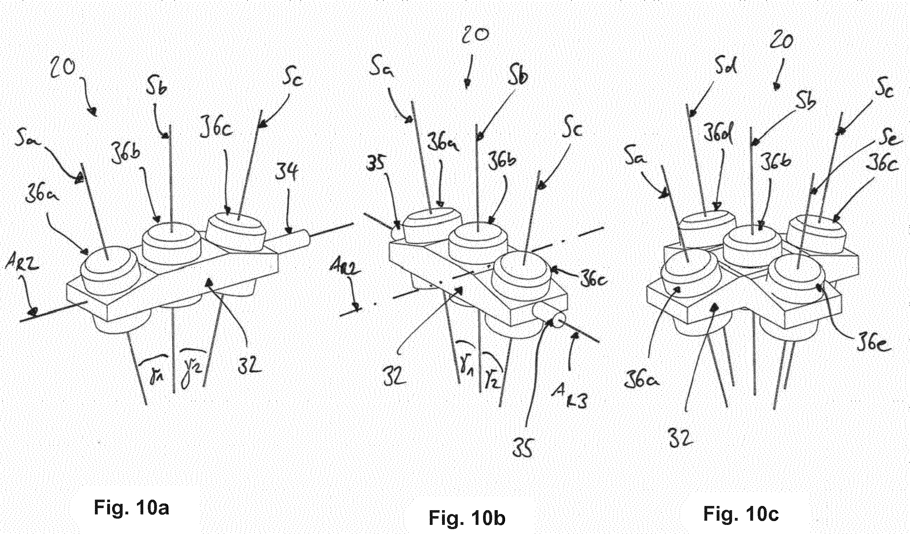

Additionally or alternatively the sonic head 20 may comprise two or more transducers as shown in Figs. 10a to 10c. According to Fig. 10a the sonic head 20 comprises three transducers 36a, 36b, 36c (in total designated with 36) each transducer 36a to 36c has a line of sight Sa, Sb, Sc. The lines of sight Sa to Sc are arranged in a plane which also includes the axis A_{R2}. Again, the head body 32 may be connected via a swivel hinge 34 to the rotor arm 24 as described with respect to Figs. 1 to 9b and thus rotatable about the axis A_{R2}. The lines of sight Sa, Sb, Sc according to Fig. 10a are angled to each other wherein the lines of sight Sa and Sb include an angle γ₁ and the lines of sight Sb and Sc include an angle γ₂ and angles γ₁ and γ₂ are identical in this embodiment. In this arrangement, transducer 36a looks slightly backwards towards the proximal portion 4 of the housing 2 when mounted in the intraoral scanning device 1 as described above, transducer 36b is arranged identical to transducer 36 according to Figs. 1 to 9b and transducer 36c slightly looks to the front. All transducers 36a, 36b, 36c together might be swiveled as it has been described with respect to Figs. 9a and 9b above. According to such arrangement, in particular gaps between tooth regions or residual tooth regions to be scanned can be recorded in an improved manner.

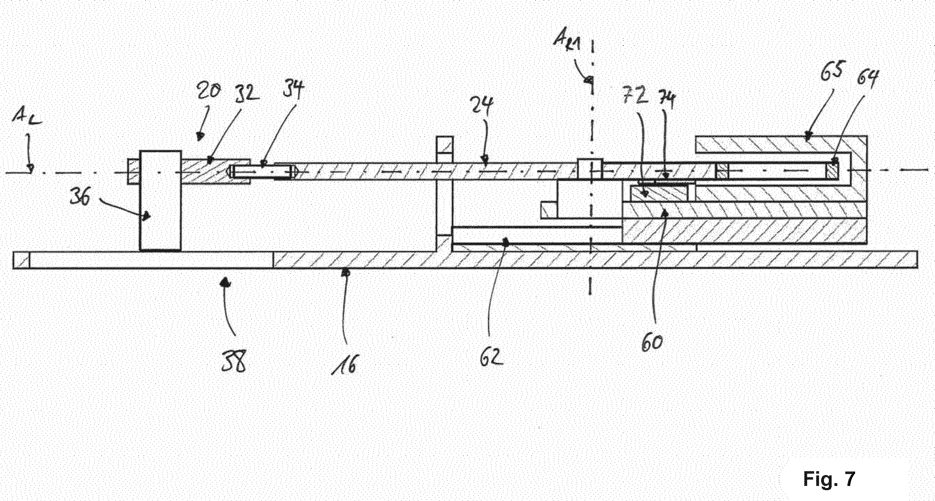

Alternatively, three transducers 36a, 36b, 36c are arranged as shown in Fig. 10b. Again, the transducers 36a, 36b, 36c are angled to each other such that the lines of sight Sa, Sb, Sc define angles γ₁ and γ₂ as has been described with respect to Fig. 10a. However, the plane which includes the lines of sight Sa, Sb, Sc is perpendicular to axis A_{R2}. In such an embodiment it is not necessary to swivel the transducers 36a, 36b, 36c about the axis A_{R2} as has been described with respect to Fig. 7, since the outermost transducers Sa and Sc are angled and are able to record side portions of the tooth region or residual tooth region to be scanned, as it has been described with respect to Fig. 9b. However, the sonic head 20 as shown in Fig. 10b is rotatable about a third axis A_{R3}. For allowing this movement, the head body 32 is provided with two support extensions 35 receivable at a corresponding support at the rotor bar 20. Such a support may be fork-shaped.

In yet a further preferred embodiment, the arrangements of Fig. 10a and 10b are combined. Such an embodiment is shown in Fig. 10c. The sonic head 20 according to Fig. 10c comprises five transducers 36a, 36b, 36c, 36d, 36e. The transducers 36a, 36b and 36c are identically arranged to the embodiment shown in Fig. 10a and reference is made to the above description with respect to Fig. 10a. Transducers 36d and 36e are arranged identical to transducers 36a and 36c of the embodiment shown in Figs. 10b and reference is made in so far to the above description of Fig. 10b. In the embodiment shown in Fig. 10c it is not necessary to swivel the sonic head 20. Due to the four additional transducers compared to the embodiment shown in Fig. 4 it is possible to record and scan gaps between tooth regions and residual tooth regions as well as side portions of tooth regions and residual tooth regions in an improved and easy manner.

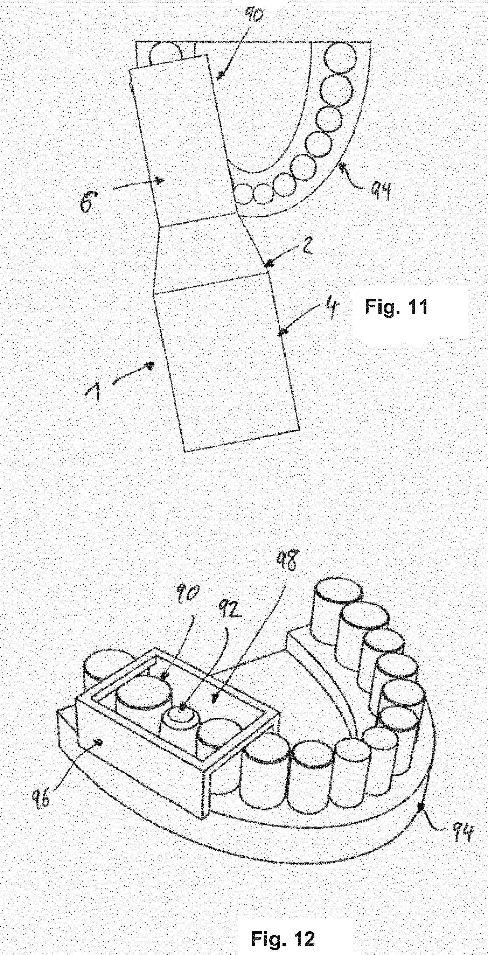

Figs. 8 and 9 illustrate the usage of the intraoral scanning device 1 for scanning a tooth region 90 or residual tooth region 92 of a lower jaw 94 of a patient. As can be seen from Fig. 11, the distal portion 6 of the housing 2 has outer dimensions which are formed such that placement within the mouth of a patient is easy feasible. The distal portion 6 of the intraoral scanning device 1 is placed above the right hand portion of a lower jaw 94 of a patient to scan a tooth region 90 and a residual tooth region 92 (see Fig. 12). The residual tooth region 92 in this embodiment is a prepared tooth which has been prepared for receiving a crown afterwards. The residual tooth region 92 as well as the neighboring tooth region 90 have to be scanned, so that the crown can be designed and fitted onto the residual tooth region 92. In Fig. 12 the tooth region 90 as well as the residual tooth region 92 are enclosed by an intraoral interface structure 96 which defines an interior space 98 which can be filled with coupling medium or the like. The intraoral interface structure 96 can be attached to the distal portion 6 of the housing 2 and corresponds to the opening 38, and in particular to the acoustic window 40 as described above. The intraoral interface structure 96 also helps to position the distal portion 6 of the intraoral scanning device 1 during a scan process.

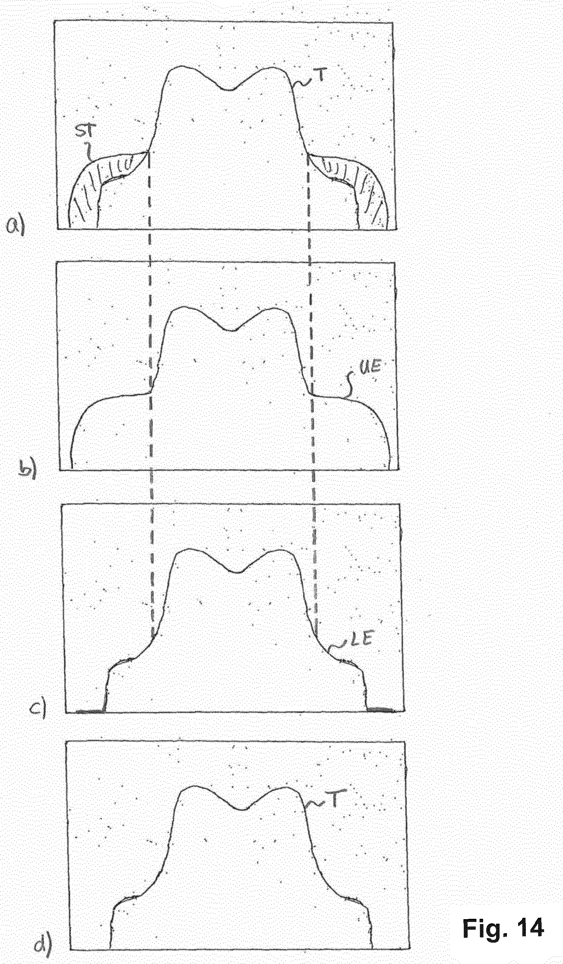

Fig. 13 shows a flowchart illustrating a method suitable for processing the ultrasound scan data recorded by the intraoral scanning device 1. In step 101, the method determines portions of the ultrasound scan data in proximity to surfaces of the tooth region or residual tooth region. How this is done is described in more detail with reference to Fig. 14, which shows further details of the method. As can be seen from Fig. 14 a), if we consider a slice through a tooth region or residual tooth region, the slice will show the tooth or residual tooth T and, where the tooth region or residual tooth region is covered by soft-tissue, e.g., gingiva, saliva, blood, or sulcular fluids, the slice will also show the soft-tissue ST. As can further be seen from Fig. 14 b) to d), here, the determination is achieved by extracting from the ultrasound scan data an upper envelope UE and a lower envelope LE of the surfaces of the tooth region or residual tooth region based on the amplitude of the ultrasound scan data and by determining the portions of the ultrasound scan data in proximity to surfaces of the tooth region or residual tooth region based on the upper envelope and the lower envelope. In more detail, the ultrasound scan data is processed on a slice-by-slice basis, wherein each slice is analyzed in order to determine in each column of the slice a first and a last position at which the amplitude of the ultrasound scan data exceeds a pre-defined threshold value. The first position is then regarded as forming part of the upper envelope UE and the last position can be regarded as forming part of the lower envelope LE. The totality of all first and last positions of all columns in all slices then forms the upper envelope UE and the lower envelope LE, respectively.

As can be seen from Fig. 14 a) to c), where the tooth region or residual tooth region is not covered with soft-tissue ST, the upper envelope UE substantially corresponds to the surface of the tooth or residual tooth T itself, whereas in covered regions it substantially corresponds to the top surface of the soft-tissue ST. In contrast, while the lower envelope also substantially corresponds to the surface of the tooth or residual tooth T itself where the tooth region or residual tooth region is not covered with soft-tissue ST, in covered regions it substantially corresponds to the bottom surface of the soft-tissue ST. It is noted, however, that due to the limited depth of focus the extracted upper and lower envelopes UE, LE can somewhat deviate from the true surfaces of the tooth region or residual tooth region. For example, the upper envelope UE and the lower envelope LE may not perfectly meet at the surface of the tooth or residual tooth T where the tooth region or residual tooth region is not covered with soft-tissue ST.

The portions of the ultrasound scan data in proximity to surfaces of the tooth region or residual tooth region are determined, here, as the portions of the ultrasound scan data between the upper envelope UE and the lower envelope LE, wherein an additional "safety margin" (not shown in the figure) can optionally be added on either side.

Additionally or alternatively, the determination of the portions of the ultrasound scan data in proximity to surfaces of the tooth region or residual tooth region can be achieved by applying a pre-defined sleeve model (not shown in the figure) that defines a sleeve around the surfaces of the tooth region or residual tooth region to the ultrasound image data. As described before, the ultrasound scan data can be processed e.g. on a slice-by-slice basis, wherein a slice of the sleeve model - or a dedicated slice sleeve model - can be fitted to the contour formed by the surfaces of the tooth region or residual tooth region in the slice. The slice of the sleeve model or the dedicated slice sleeve model can also be referred to as a "tube model", since it resembles a tube that encloses the formed contour.

Preferably, a plurality of pre-defined sleeve models resp. tube models are provided in a database, wherein a model that matches the surface geometry of the tooth region or residual tooth region can be selected from the database based on the ultrasound scan data and/or additional a-priori information. For instance, the model can be selected based on the dimensions, e.g., width, length and/or depth, of one or more of the upper and lower envelopes UE, LE described above. Additionally or alternatively, a-priori information about e.g. the number of teeth or residual teeth T in the scanned tooth region or residual tooth region, the location of the teeth or residual teeth T or the selected intraoral interface structure can be used for selecting the model. The selected model can then be applied to the ultrasound image data based on the above-described parameters / characteristics as well as the coordinates of the high frequency sonic head during the ultrasound scan. The pre-defined sleeve models resp. tube models can be determined, for instance, using statistical methods from a large number of ultrasound scans of different tooth regions or residual tooth regions.

Referring back to Fig. 13, in step 102, the method applies a synthetic aperture focusing technique (SAFT) only to the determined portions in order to enhance the depth of focus of the ultrasound scan data in the determined portions. In this way, the amount of ultrasound scan data to be processed can be reduced, resulting in a corresponding reduction of processing time. The applied SAFT method is based on the assumption that the focal point of a single ultrasound transducer can be viewed as a virtual acoustic point source of a spherical wave (VSAFT). This variant of the "original" SAFT method is particularly well suited for use with a highly focusing single ultrasound transducer and allows to obtain a resolution of the ultrasound scan data that is substantially independent of depth.

Since the sound field of a highly focusing single ultrasound transducer typically comprises additional side lobes that can lead to artifacts in the ultrasound scan data, the VSAFT method is combined, here, with a suitable weighting method, e.g., with the so-called "coherent factor", the "minimum variance beamforming" or an apodization window such as a boxcar window, a Hanning window or a Hann window.

In order to further optimize the resolution and to reduce noise, the SAFT-processed ultrasound scan data are filtered in step 103 with a plurality of frequency filters (e.g., in the range of 1 to 200 MHz, preferably 20 to 100 MHz). Thereafter, in step 104, the filtered ultrasound scan data are demodulated in order to determine the envelope. Optionally, a suitable grayscale coding and a further noise reduction by means of a median filtering can be performed in steps 105 and 106. In order to optimize the information content, the scanning process and the subsequent data processing may be repeated for different ultrasound directions.

In the case of subgingivally prepared teeth, the method removes, in step 107, portions of the ultrasound scan data corresponding to soft-tissue, in particular, the gingiva, of the tooth region or residual tooth region. Therewith, ultrasound scan data that obscure the preparation border of a tooth or residual tooth to be restored can be eliminated from the data record, preferably leaving only ultrasound scan data corresponding to the actual tooth or residual tooth.

The removal is also described in more detail with reference to Fig. 14. It is based on a similar process as the determination of the portions of the ultrasound scan data in proximity to surfaces of the tooth region or residual tooth region described above. In particular, an upper envelope UE and a lower envelope LE of the surfaces of the tooth region or residual tooth region can be extracted again based on the amplitude of the processed ultrasound scan data. Since the depth of focus of the ultrasound scan data has been enhanced by applying the SAFT method, the extracted upper and lower envelopes UE, IE will now resemble the surfaces of the tooth region or residual tooth region with a higher accuracy than before the SAFT processing. Based on the upper envelope UE and the lower envelope LE, the portions corresponding to the soft-tissue ST can then be identified and removed. For instance, an extend of the portions of the ultrasound scan data between the upper envelope UE and the lower envelope LE can be analyzed, wherein, when the extend exceeds a pre-defined threshold value, a portion is identified to correspond to soft-tissue ST, and when the extend does not exceed the pre-defined threshold value, the portion is identified to correspond to the tooth or residual tooth T. As as result of the processing, the tooth or residual tooth T without the soft-tissue ST is identified, as shown in Fig. 14 d).

Referring back to Fig. 13, in step 108, the method extracts points from the ultrasound scan data corresponding to surface points of a tooth or residual tooth based on a maximum intensity projection (MIP). In doing so, it is assumed that the location of the maximum echo amplitude corresponds to a point on the surface of a tooth or residual tooth. This allows for a reliable segmentation of the surfaces of the tooth or residual tooth. This step may also comprise an additional threshold-based filtering.

The extracted points, or if multiple scans have been performed, the points extracted from each scan, are finally reconstructed, in step 109, to generate a three-dimensional surface reconstruction of the tooth or residual tooth. Here, this is performed by fitting a model of the geometry of the tooth or residual tooth to the points. Thereby, the model, which is preferably a statistical model of the geometry of the tooth or residual tooth, is selected in dependence of the form of the tooth to be restored. For instance, the model is selected based on one or more of (i) the specific preparation of the tooth or residual tooth, (ii) the type of the tooth or residual tooth (e.g., incisor or molar), and (iii) the size of the tooth or residual tooth (e.g., on a scale from 1 to 10). Here, a plurality of models having different characteristics in each of these dimensions are provided in a database. The fitting then reduces the average distance between the extracted points and the model using, for instance, a non-rigid iterative closest point (ICP) algorithm. As an alternative to this "model fitting"-based reconstruction, the points can be interpolated based on knowledge about the tooth or residual tooth. The knowledge, in this case, can be the same or similar to the above-described characteristic dimensions of the geometry model, i.e., the specific preparation, type and/or size of the tooth or residual tooth. The interpolation may be two- or three-dimensional and may be based, for instance, on the known thin-plate spline robust point matching algorithm (TPS-RPM). Finally, it is also contemplated to combine the "model fitting"-based approach and the knowledge-based interpolation approach.

## Claims

1. A method for reconstructing dental structures, such as dents or residual dents (220), which can be at least partly covered by body fluids or soft tissue, such as gingiva (230), blood and saliva, in a region of interest (210), the method (200) comprising:
- providing (201) a surface reflection scan (240) of the dental structures,
- providing (202) a sub-surface reflection scan (250) of the dental structures,
- fusing (203-208) the surface reflection scan (240) and the sub-surface reflection scan (250) in order to reconstruct the dental structures, wherein the fusing comprises:
- segmenting (203) dental tissue from non-dental tissue based on the sub-surface reflection scan (250),
- generating (203) a dental model (260) based on the segmented dental tissue, and
- fusing (203-208) the surface reflection scan (240) and the dental model (260).

2. The method (200) of claim 1, wherein the sub-surface reflection scan (250) is based on a non-invasive procedure, in particular at least one of ultrasound and optical coherence tomography

3. The method (200) of any of the preceding claims, wherein the surface reflection scan (240) is provided based on a dental impression of the dental structures, in particular based on a dental impression of both jaws and a bite registration.

4. The method (200) of claim 3, wherein the surface reflection scan (240) comprises an extraoral digital optical scan of an analogue dental impression.

5. The method (200) of claim 1, wherein the surface reflection scan (240) comprises an intraoral optical scan.

6. The method (200) of claim 1, wherein the region of interest (210) comprises at least one dent to be restored (220) before or after preparation, called tooth or residual tooth.

7. The method (200) of claim 6, wherein the region of interest (210) further comprises at least one neighboring dent, preferentially in case the dent to be restored is before preparation.

8. The method (200) of claim 1, wherein the step of fusing (203-208) the surface reflection scan (240) with the sub-surface reflection scan (250) further comprises
- registering (204) the dental model (260) with the surface reflection scan (240) by a) aligning the dental model (260) with the surface reflection scan (240) using a point to point registration and b) best-fit registration.

9. The method (200) of claim 1, wherein the step of fusing (203-208) the surface reflection scan (240) with the sub-surface reflection scan (250) further comprises:
- cropping (205) the dental model (260) to the region of interest (210), and
- cutting (205) the region of interest (210) from the surface reflection scan (240).

10. The method (200) of claim 9, wherein the step of fusing (203-208) the surface reflection scan (240) with the sub-surface reflection scan (250) further comprises, after cropping (205) the dental model (260) to the region of interest (210),
- converting (206) the dental model (260) to a dental point cloud,
and optionally
- adapting the resolution of points of the surface reflection scan (240) and/or the dental point cloud to approximately match.

11. The method (200) of claim 10, wherein the step of fusing (203-208) the surface reflection scan (240) with the sub-surface reflection scan (250) further comprises at least one of
- fusing (207) the surface reflection scan (240) and the dental point cloud to a common point cloud,
- crosslinking (208) the common point cloud such as to reconstruct a surface of the dental structure,
- correcting (208) surface errors due to erroneous crosslinking (208), and
- closing (208) surface holes of the dental structure.

12. The method (200) of claim 1, further comprising
- preparing (209) the reconstructed dental structures for digital printing.

13. The method (200) of claim 1, wherein the sub-surface reflection scan (250) comprises an ultrasound scan, wherein the ultrasound scan is obtained using an intraoral scanning device (1) for recording ultrasound scan data in the region of interest (210), such as a mouth of a patient, wherein the intraoral scanning device (1) comprises:
a housing (2) having a proximal portion (4) and a distal portion (6), the distal portion (6) being adapted for placement within the patient's mouth;
a high frequency sonic head (20) comprising at least one transducer (36) for scanning a covered or non-covered tooth region (90) or residual tooth region (92) and mounted within the distal portion (6) of the housing (2), and
means for applying excitation signals to the sonic head (20) in order thereby to produce an ultrasonic wave which passes over at least part of the tooth region (90) or residual tooth region (92) such that the sonic head (20) receives ultrasonic waves reflected by the tooth region (90) or residual tooth region (92) to be scanned,
wherein the sonic head (20) is movable at least in a first and a second degree of freedom,
and by a drive assembly (22) arranged within the proximal portion (4) of the housing (2) for driving the sonic head (20) in the first and second degree of freedom such that the sonic head (20) is movable in a plane for applying the ultrasonic wave to a pre-determined region of the tooth region or residual tooth region.

14. A system for reconstructing dental structures, such as dents or residual dents, which are at least partly covered by soft tissue, such as gingiva, in a region of interest, the system comprising:
- a surface reflection scan providing unit (310) for providing (201) a surface reflection scan (240) of the dental structures,
- a sub-surface reflection scan providing unit (320) for providing (202) a sub-surface reflection scan (250) of the dental structures,
- a fusing unit (330) for fusing (203-208) the surface reflection scan (240) and the sub-surface reflection scan (250) in order to reconstruct the dental structures, wherein the fusing unit (330) comprises:
- a segmentation unit (340) for segmenting (203) dental tissue from non-dental tissue based on the sub-surface reflection scan (250),
- a dental model generating unit (350) for generating (203) a dental model (260) based on the segmented dental tissue, wherein
the fusing unit (330) is configured to fuse the surface reflection scan (240) and the dental model (260).

15. A computer program for reconstructing dental structures, the computer program comprising program code means for causing a system as defined in claim 14 to carry out the method as defined in claim 1, when the computer program is run on the system.
